# EUROPÄISCHE PATENTANMELDUNG

(11) **EP 4 604 349 A2**
(43) Veröffentlichungstag der Anmeldung: **20.08.2025**
(21) Anmeldenummer: 25157082.6
(22) Anmeldetag: 11.02.2025
(51) Int. Cl.: H02J 3/32

(54) **VERFAHREN, COMPUTERPROGRAMM UND RECHENEINHEIT ZUM BETREIBEN VON MINDESTENS ZWEI VONEINANDER UNABHÄNGIGEN ENERGIESPEICHERN IN EINEM ELEKTRISCHEN TEILNETZ, SOWIE ELEKTRISCHES TEILNETZ**

(30) Priorität: 14.02.2024 DE 102024104143
(71) Anmelder: Viessmann Holding International GmbH, 35108 Allendorf (Eder) (DE)
(72) Erfinder: FÜTTERER, Cornelius, 37339 Gernrode (DE); LANDAU, Christian, 34295 Edermünde-Besse (DE)
(74) Vertreter: MERH-IP Matias Erny Reichl Hoffmann Patentanwälte PartG mbB

(57) **Zusammenfassung**

Die vorliegende Erfindung betrifft ein Verfahren zum Betreiben von mindestens zwei voneinander unabhängigen Energiespeichern in einem elektrischen Teilnetz, sowie eine Recheneinheit und ein Computerprogramm zur Ausführung des Verfahrens und ein elektrisches Teilnetz. Das Verfahren umfasst die Schritte -eines Bestimmen einer Soll-Leistungsabgabe bzw. einer Soll-Leistungsaufnahme am Netzanschlusspunkt (125) als erste Führungsgröße; eines Bestimmens einer Soll-Leistungsabgabe bzw. einer Soll-Leistungsaufnahme des ersten Energiespeichers (150) als zweite Führungsgröße; eines Ermittelns einer ersten Abweichung von der ersten Führungsgröße und einer zweiten Abweichung von der zweiten Führungsgröße; und eines Einstellens einer Leistungsabgabe oder einer Leistungsaufnahme des ersten Energiespeichers (150) basierend auf einer Gewichtung zwischen der ersten Abweichung und der zweiten Abweichung.

## Beschreibung

Die vorliegende Erfindung betrifft ein Verfahren zum Betreiben von mindestens zwei voneinander unabhängigen Energiespeichern in einem elektrischen Teilnetz, sowie eine Recheneinheit und ein Computerprogramm zur Ausführung des Verfahrens und ein elektrisches Teilnetz.

### Hintergrund der Erfindung

Elektrische Teilnetze, wie beispielsweise ein Hausnetz, sind üblicherweise mittels eines Netzanschlusspunkts mit einem übergeordneten Verteilnetz bzw. Übertragungsnetz verbunden. Ein solches Teilnetz kann eigene Energieerzeugereinheiten, wie z.B. eine Photovoltaikanlage, sowie Energiespeicher und Energieverbraucher umfassen. Um mittels der Energieerzeugereinheit bereitgestellte elektrische Energie möglichst selbst zu nutzen, sind die Teilnetze häufig dazu eingerichtet, eine über den Netzanschlusspunkt an das übergeordnete Verteilnetz fließende Leistung zu minimieren und im Falle eines Energieüberschusses möglichst viel selbsterzeugte Energie in den Energiespeichern zu puffern. Um dies zu erreichen, können diese dazu eingerichtet sein, eine Wirkleistung am Netzanschlusspunkt z.B. auf null zu regeln. Wenn in diesem Fall zusätzliche Energiespeicher in das Teilnetz integriert werden sollen, so ist eine übergeordnete Regelung (Energiemanagementsystem) oder eine Kommunikation der Energiespeicher untereinander notwendig, um gegenseitige Beeinflussungen, z.B. ungewollten Energieaustausch zwischen den Speichern, zu vermeiden. Eine solche Regelung/Kommunikation ist jedoch, insbesondere bei Verwendung von Energiespeichern von unterschiedlichen Herstellern, nicht in jedem Fall verfügbar, so dass es wünschenswert ist, unabhängige Energiespeicher in einem gemeinsamen Teilnetz betreiben zu können, ohne dass negative Wechselwirkungen zwischen diesen auftreten.

Der Erfindung liegt die Aufgabe zugrunde, einen Betrieb von mindestens zwei voneinander unabhängigen, nicht miteinander kommunizierenden Energiespeichern in einem elektrischen Teilnetz derart zu koordinieren, dass sich die Energiespeicher nicht negativ beeinflussen, insbesondere nicht gegenseitig laden und/oder entladen. Dadurch können beispielsweise Energiespeicherbestandsanlagen mit Netzanschlusspunktregelung um zusätzliche Energiespeicher, z.B. von anderen Herstellern, erweitert werden.

Zur Lösung der Aufgaben werden die Merkmale der unabhängigen Ansprüche vorgeschlagen. Vorteilhafte Ausgestaltungen finden sich in den abhängigen Ansprüchen.

### Offenbarung der Erfindung

Das erfindungsgemäße Verfahren dient zum Betreiben von mindestens einem ersten und mindestens einem zweiten, von dem ersten unabhängigen, Energiespeicher in einem elektrischen Teilnetz. Unter einem zweiten unabhängigen Energiespeicher soll dabei ein Energiespeicher verstanden werden, der sich nicht in einem Energiespeichersystem des ersten Energiespeichers befindet, folglich nicht ohne weiteres von dessen Energiespeichermanagement (ESM) gesteuert/geregelt werden und auch nicht mit dem ersten Energiespeicher kommunizieren kann. Dies kann beispielsweise der Fall sein, wenn der zweite Energiespeicher von einem anderen Hersteller stammt als der erste Energiespeicher. Die Begriffe "erster" und "zweiter" Energiespeicher dienen hier lediglich zur Unterscheidung eines Energiespeichers von einem anderen Energiespeicher und begrenzen die Anzahl Energiespeicher in dem elektrischen Teilnetz nicht auf zwei.

Der erste und zweite Energiespeicher können insbesondere Batteriespeicher zum Speichern elektrischer Energie sein, die jeweils mindestens einen Wechselrichter umfassen. Die Batteriespeicher können z.B. mit Lithium-Ionen- und/oder Lithium-Eisenphosphat-Batterien ausgestattet sein. Die Wechselrichter des ersten und zweiten Energiespeichers können jeweils ein Wechselrichtermodul mit Leistungselektronikbauteilen sowie eine Recheneinheit mit einem Prozessor umfassen. Das Verfahren kann ebenso dazu verwendet werden, andere unabhängige Komponenten in dem elektrischen Teilnetz, wie beispielsweise zusätzliche unabhängige Energieerzeugereinheiten (z.B. Photovoltaikanlagen) zu betreiben.

Bei dem elektrischen Teilnetz kann es sich insbesondere um ein Hausnetz, beispielsweise um ein Hausnetz mit einem Leistungsbereich (elektrische Leistung) bis ca. 10 kW (z.B. für ein Einfamilienhaus) oder bis ca. 100kW (z.B. für ein Mehrfamilienhaus oder eine Gewerbeimmobilie) handeln. Andere Arten von Teilnetzen, wie z.B. ein Netzabschnitt eines Verteilnetzes zur Versorgung einer Liegenschaft oder ein Verteilnetz zur Versorgung einer Ortschaft, sind ebenso möglich.

Das elektrische Teilnetz ist über einen Netzanschlusspunkt mit einem übergeordneten Netz (z.B. Verteilnetz, Inselnetz oder Übertragungsnetz) verbunden und enthält neben den Energiespeichern mindestens eine Energieerzeugereinheit zur Erzeugung von elektrischer Energie, mindestens einen Energieverbraucher sowie mindestens ein Messgerät zur Erfassung aller Energieflüsse in dem elektrischen Teilnetz am Netzanschlusspunkt. Bei der mindestens einen Energieerzeugereinheit kann es sich insbesondere um eine Photovoltaikanlage (PV-Anlage) handeln. Andere Energieerzeugereinheiten, wie Windkraftanlagen etc., sind ebenso möglich. Das mindestens eine Messgerät kann beispielsweise ein Energiezähler sein, der den Stromfluss am Netzanschlusspunkt erfasst und daraus die Energieflüsse in dem elektrischen Teilnetz ermittelt. Insbesondere kann für jeden der beiden Energiespeicher ein Energiezähler vorhanden sein, d.h. der erste und der zweite Energiespeicher können jeweils über einen eigenen Energiezähler verfügen. Des Weiteren kann der erste Energiespeicher mindestens ein Strom- und mindestens ein Spannungsmessgerät umfassen, um die Leistungsabgabe/- aufnahme des ersten Energiespeichers zu bestimmen.

Bei dem Verfahren zum Betreiben des ersten und zweiten Energiespeichers in dem Teilnetz wird eine Soll-Leistungsabgabe bzw. einer Soll-Leistungsaufnahme am Netzanschlusspunkt des Teilnetzes als erste Führungsgröße und eine Soll-Leistungsabgabe bzw. einer Soll-Leistungsaufnahme des ersten Energiespeichers als zweite Führungsgröße bestimmt/festgelegt. Mit anderen Worten wird als erste Führungsgröße für eine Regelung der Energieflüsse in dem Teilnetzwerk festgelegt, wieviel Leistung in das übergeordnete Netz eingespeist bzw. aus diesem bezogen werden soll. Gleichermaßen wird als zweite Führungsgröße der Regelung ein Sollwert für die Leistungsaufnahme/-abgabe des ersten Energiespeichers festgelegt.

Gemäß einer Ausführungsform kann für die Soll-Leistungsabgabe/-aufnahme am Netzanschlusspunkt und die Soll-Leistungsaufnahme/-abgabe des ersten Energiespeichers jeweils ein Wert von null bestimmt werden, d.h. die erste und die zweite Führungsgröße können auf einen Soll-Leistungswert von OW festgelegt werden. Auf diese Weise kann sowohl eine Leistung über den Netzanschlusspunkt als auch eine Leistung des ersten, systemeigenen Energiespeichers minimiert und zunächst nur Leistung von dem zweiten, unabhängigen Energiespeicher aufgenommen oder abgegeben werden. Dies gilt insbesondere, wenn eine Soll-Leistungsaufnahme /-abgabe des zweiten Energiespeichers am Netzanschlusspunkt ebenfalls OW beträgt.

Die beiden Führungsgrößen können beispielsweise in einer Recheneinheit des elektrischen Teilnetzes gespeichert und an eine Recheneinheit des ersten Energiespeichers gesendet werden. Die Recheneinheit des Teilnetzwerks kann insbesondere die Recheneinheit des ersten Energiespeicher oder eine separate Recheneinheit sein. Der zweite Energiespeicher kann eine separate Recheneinheit umfassen, welche diesen unabhängig von dem ersten Energiespeicher steuern/regeln kann. Die Recheneinheiten können signaltechnisch jeweils mit dem mindestens einen Energiezähler verbunden und dazu eingerichtet sein, Messwerte von diesem zu empfangen. Insbesondere können die Recheneinheiten des ersten und zweiten Energiespeichers jeweils auf einen eigenen Energiezähler zugreifen.

Nach Festlegung der ersten und zweiten Führungsgröße wird eine erste Abweichung von der ersten Führungsgröße und eine zweite Abweichung von der zweiten Führungsgröße ermittelt und eine Leistungsabgabe oder eine Leistungsaufnahme des ersten Energiespeichers basierend auf einer Gewichtung zwischen der ersten Abweichung und der zweiten Abweichung eingestellt. Gemäß einer Ausführungsform kann es sich bei der Gewichtung beispielsweise um mindestens einen Gewichtungsfaktor F_{G} handeln. Dieser kann z.B. Werte zwischen null und eins annehmen. In diesem Fall kann z.B. die erste Abweichung mit dem Gewichtungsfaktor F_{G} und die zweite Abweichung mit einer Differenz 1-F_{G} multipliziert werden, um die Leistungsabgabe/-aufnahme des ersten Energiespeichers einzustellen

Zur Ermittlung der ersten Abweichung von der ersten Führungsgröße kann beispielsweise der Energiezähler eine Ist-Leistungsabgabe/-aufnahme am Netzanschlusspunkt messen und diese mit der Soll-Leistungsabgabe/-aufnahme vergleichen. Die zweite Abweichung von der zweiten Führungsgröße kann entsprechend durch Vergleichen einer Ist- Leistungsabgabe/-aufnahme des ersten Energiespeichers mit dessen Soll-Leistungsabgabe/-aufnahme ermittelt werden. Die erste und zweite Abweichung können insbesondere in der Recheneinheit des Teilnetzwerks und/oder in der Recheneinheit des ersten Energiespeichers berechnet werden.

Gemäß einer Ausführungsform kann die Gewichtung zwischen der ersten und der zweiten Abweichung abhängig von einem Absolutwert der ersten Abweichung erfolgen. Dazu kann die ermittelte erste Abweichung z.B. mittels eines Mittelwert- oder eines PT1-Filters über mehrere Werte gefiltert, ein Betrag des gefilterten Wertes gebildet und daraus beispielsweise der Gewichtungsfaktor F_{G} bestimmt werden.

Insbesondere kann die Gewichtung zwischen der ersten und zweiten Abweichung derart erfolgen, dass mit steigendem Absolutwert der ersten Abweichung die Leistungsabgabe/-aufnahme des ersten Energiespeichers zunimmt. Insbesondere erfährt die erste Abweichung eine geringe Gewichtung, wenn sie nur kleine Werte aufweist, und die zweite Abweichung wird entsprechend stärker gewichtet, während bei großen Abweichungen der ersten Abweichung die zweite Abweichung schwächer und die erste Abweichung stärker gewichtet wird. Auf diese Weise wird bei sehr kleiner Leistungsabgabe/-aufnahme über den Netzanschlusspunkt, insbesondere wenn der zweite Energiespeicher im Wesentlichen eine benötigte Leistung an das Teilnetz abgibt (z.B. durch Betrieb eines Energieverbrauchers) oder Überschussleistung aus diesem aufnimmt (z.B. durch Betrieb der PV-Anlage), die Leistungsabgabe/-aufnahme des ersten Energiespeichers im Wesentlichen auf die Führungsgröße von OW geregelt werden. Wenn der zweite Energiespeicher, die in dem Teilnetz benötigte Leistung nicht mehr (vollständig) bereitstellen oder von einem Energieerzeuger in das Teilnetz eingespeiste Leistung nicht mehr (vollständig) aufnehmen kann, steigt der Absolutwert der ersten Abweichung an und es erfolgt eine kontinuierliche Verschiebung der Gewichtung von der zweiten Abweichung hin zu der ersten Abweichung, so dass nun die erste Abweichung stärker korrigiert wird. Dadurch kommt es zu einer steigenden Leistungsabgabe/- aufnahme des ersten Energiespeichers, um den Netzbezug/die Netzeinspeisung zu minimieren, wenn der zweite Energiespeicher die benötigte Leistung nicht mehr (vollständig) bereitstellen oder einen Leistungsüberschuss nicht mehr (vollständig) aufnehmen kann. Das beschriebene Verhalten kann insbesondere mittels eines geschlossenen Regelkreises eingestellt werden.

Gemäß einer Ausführungsform kann die Gewichtung zwischen der ersten und der zweiten Abweichung derart erfolgen, dass bei einer Leistungsabgabe/-aufnahme des ersten Energiespeichers eine bestimmte erste Abweichung erhalten bleibt. Mit anderen Worten kann mittels der Gewichtung eine Regelabweichung von der zweiten Führungsgröße (zweite Abweichung) derart begrenzt werden, dass eine Regelabweichung von der ersten Führungsgröße (erste Abweichung) durch den ersten Energiespeicher nicht vollständig eliminiert/ausgeregelt wird. Mit anderen Worten kann eine minimale Gewichtung der Regelabweichung von der zweiten Führungsgröße größer als null sein. Dies kann beispielsweise mittels eines oder mehrerer Verstärkungsfaktoren eingestellt werden, mit denen die erste und/oder die zweite Abweichung verstärkt/skaliert werden kann. In diesem Fall wird eine der bestimmten ersten Abweichung entsprechende Leistung in das übergeordnete Netz abgegeben (Netzeinspeisung) bzw. aus diesem bezogen (Netzbezug), wobei die Netzeinspeisung/der Netzbezug deutlich kleiner als die Leistungsabgabe/- aufnahme des ersten Energiespeichers ist. Dadurch kann verhindert werden, dass eine in dem ersten Energiespeicher gespeicherte Energie von der Recheneinheit des zweiten Energiespeichers als Überschussleistung erkannt und zum Laden des zweiten Energiespeichers genutzt wird. Ebenso kann im umgekehrten Fall, bei einer Leistungsaufnahme (Laden) des ersten Energiespeichers verhindert werden, dass der erste Energiespeicher von der Recheneinheit des zweiten Energiespeichers als Verbraucher erkannt und auch von dem zweiten Energiespeicher geladen wird.

Gemäß einer Ausführungsform kann die bestimmte erste Abweichung in Abhängigkeit einer Messtoleranz des mindestens einen Messgeräts am Netzanschlusspunkt bestimmt werden. Wenn eine Netzeinspeisung bzw. ein Netzbezug, z.B. von dem Energiezähler des ersten Energiespeichers am Netzanschlusspunkt, sehr genau ermittelt werden kann, so kann die bestimmte erste Abweichung beim Entladen oder Laden des ersten Energiespeichers entsprechend klein eingestellt werden, da in diesem Fall nicht die Gefahr besteht, dass es z.B. zu einer Fehldetektion der Leistungsflussrichtung am Netzanschlusspunkt kommt, die dazu führen kann, dass die Recheneinheit des zweiten Energiespeichers den ersten Energiespeicher fälschlicherweise als Energieerzeuger bzw. Energieverbraucher erkennt, wodurch es wiederum zu einem unerwünschten Laden oder Entladen des ersten Energiespeichers durch den zweiten Energiespeicher kommen kann.

Gemäß einer Ausführungsform können die gewichtete erste und die gewichtete zweite Abweichung einem Regler zugeführt werden, um die Leistungsabgabe/- aufnahme am Netzanschlusspunkt und die Leistungsabgabe/-aufnahme des ersten Energiespeichers einzustellen. Beispielsweise kann dem Regler eine Differenz zwischen der gewichteten ersten und der gewichteten zweiten Abweichung zugeführt werden, der daraus z.B. eine Stellgröße für den Wechselrichter des ersten Energiespeichers bestimmen kann. Insbesondere kann es sich bei dem Regler um einen PI-Regler handeln. Der Regler kann beispielsweise in der Recheneinheit des Teilnetzwerks und/oder insbesondere in der Recheneinheit des ersten Energiespeichers integriert sein.

Eine erfindungsgemäße Recheneinheit ist, insbesondere programmtechnisch, dazu eingerichtet, das vorstehend beschriebene erfindungsgemäße Verfahren durchzuführen. Bei der Recheneinheit kann es sich um eine Recheneinheit eines elektrischen Teilnetzes handeln, die beispielsweise in einer Recheneinheit eines ersten Energiespeichers enthalten oder eine separate Recheneinheit sein kann.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Die vorliegende Erfindung ermöglicht ein koordiniertes Laden und Entladen des ersten und zweiten Energiespeichers, indem sowohl die Leistungsabgabe/- aufnahme am Netzanschlusspunkt als auch die Leistungsaufnahme/-abgabe des ersten Energiespeichers geregelt werden und eine Gewichtung der beiden Regelgrößen (erste und zweite Abweichung) erfolgt. Dadurch kann zunächst der zweite Energiespeicher vollständig entladen/geladen werden bevor der erste Energiespeicher zum Einsatz kommt. Zudem wird durch die Gewichtung der ersten und zweiten Abweichung und der daraus resultierenden geringen Leistungsabgabe/-aufnahme aus dem übergeordneten Netz sichergestellt, dass bei einer Leistungsabgabe/-aufnahme des ersten Energiespeichers keine Leistung in den/aus dem zweiten Energiespeicher fließt.

### Kurzbeschreibung der Figuren

Figur 1 zeigt schematisch ein elektrisches Teilnetz gemäß einem Ausführungsbeispiel der Erfindung, das einen ersten Energiespeicher und einen zweiten, unabhängigen Energiespeicher umfasst.
Figur 2 zeigt schematisch und exemplarisch einen Funktionsblock zur Regelung des ersten Energiespeichers in dem in Figur 1 gezeigten Teilnetz.
Die Figuren 3a und 3b zeigen jeweils einen absoluten und einen relativen Verlauf einer Leistungsabgabe/-aufnahme am Netzanschlusspunkt als Funktion einer gesamten Leistungsabgabe/-aufnahme in dem in Figur 1 gezeigten Teilnetz, wenn der erste Energiespeicher aktiv ist.
Die Figuren 4a bis 4c zeigen Energieflüsse und Ladezustände der beiden Energiespeicher in dem in Figur 1 gezeigten Teilnetz, wenn das erfindungsgemäße Verfahren nicht angewendet wird.
Die Figuren 5a bis 5c zeigen Energieflüsse und Ladezustände der beiden Energiespeicher in dem in Figur 1 gezeigten Teilnetz, wenn ein Ausführungsbeispiel des erfindungsgemäßen Verfahrens angewendet wird.

### Detaillierte Beschreibung bevorzugter Ausführungsbeispiele

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt. In den Figuren sind gleiche oder vergleichbare Elemente mit gleichen Bezugszeichen versehen, so dass auf eine wiederholte Beschreibung der Elemente verzichtet wird, sofern dies nicht notwendig ist.

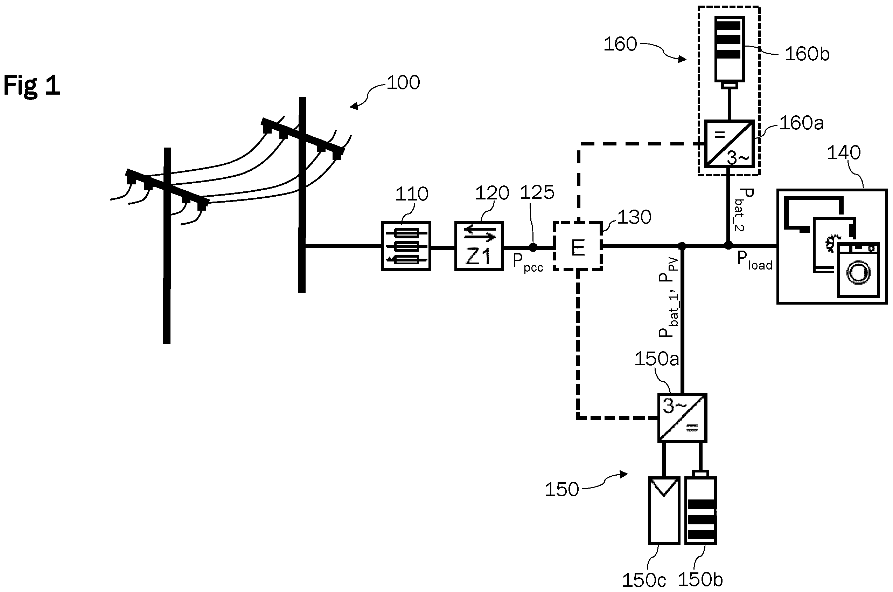

Figur 1 zeigt schematisch ein elektrisches Teilnetz gemäß einem Ausführungsbeispiel der Erfindung. Bei dem dargestellten elektrischen Teilnetz handelt es sich um ein Hausnetz, das über einen Netzanschlusspunkt 125 mit einem übergeordneten Netz 100, das z.B. ein Verteilnetz, ein Inselnetz oder ein Übertragungsnetz sein kann, verbunden ist. Vor dem Netzanschlusspunkt 125 sind auf Seiten des übergeordneten Netzes 100 ein Netzanschlusskasten 110 sowie ein Netzanschlusszähler 120 des Netzbetreibers/Energieversorgers angeordnet. An dem Netzanschlusspunkt 125 ist auf Seiten des Hausnetzes vorliegend ein Energiezähler 130 angeordnet, der den Stromfluss am Netzanschlusspunkt 125 erfasst und daraus die Energieflüsse in dem elektrischen Hausnetz ermittelt. Über den Netzanschlusspunkt 125 kann elektrische Leistung P_{pcc} zwischen dem Hausnetz und dem übergeordneten Netz 100 ausgetauscht werden. Um jedoch in dem Hausnetz erzeugte Energie weitgehend selbst zu nutzen, werden die Energieflüsse in diesem vorzugsweise auf eine elektrische Leistung P_{pcc, set} = OW (erste Führungsgröße) geregelt.

Das Hausnetz enthält vorliegend einen ersten Energiespeicher 150 sowie eine Photovoltaikanlage (PV-Anlage, nicht dargestellt), deren erzeugte Energie mittels entsprechender Photovoltaikanschlüsse 150c an dem ersten Energiespeicher 150 in das Hausnetz eingespeist wird. Der dargestellte erste Energiespeicher 150 weist zudem eine erste Batterie 150b sowie einen ersten Wechselrichter 150a auf. Der erste Energiespeicher 150 kann auch mehrere erste Batterien 150b enthalten. Der erste Wechselrichter 150a kann ein Wechselrichtermodul mit Leistungselektronikbauteilen sowie eine Recheneinheit mit einem Prozessor umfassen (nicht dargestellt), welche zur Regelung einer Leistungsabgabe/- aufnahme des ersten Energiespeichers dienen kann. Dazu kann die Recheneinheit des ersten Energiespeichers 150 eine von dem Energiezähler 130 an dem Netzanschlusspunkt 125 gemessene Leistung empfangen (angedeutet durch die gestrichelte Linie zwischen dem Energiezähler 130 und dem ersten Wechselrichter 150a) und daraus eine mittels des ersten Wechselrichters 150a einzustellende Leistungsabgabe/-aufnahme ermitteln. Über den ersten Wechselrichter 150a kann dabei eine Leistungsabgabe bzw. eine Leistungsaufnahme P_{bat_1} der ersten Batterie 150b sowie eine Leistungseinspeisung P_{PV} der PV-Anlage erfolgen. Des Weiteren kann der erste Energiespeicher 150 mindestens ein Strom- und mindestens ein Spannungsmessgerät umfassen (nicht dargestellt), um die Leistungsabgabe/- aufnahme des ersten Energiespeichers 150 zu bestimmen.

Das dargestellte Hausnetz enthält außerdem mehrere Energieverbraucher 140, wobei beispielhaft und nicht näher bezeichnet ein Fernseher, ein Kühlschrank und eine Waschmaschine dargestellt sind, die im Betrieb eine Leistung P_{load} aus dem Hausnetz entnehmen.

Weiterhin umfasst das Hausnetz einen zweiten Energiespeicher 160, der unabhängig von dem ersten Energiespeicher 150 und parallel zu diesem an das Hausnetz angeschlossen ist. Der zweite Energiespeicher 160 enthält vorliegend eine zweite Batterie 160b sowie einen zweiten Wechselrichter 160a. Dieser kann ebenfalls ein Wechselrichtermodul mit Leistungselektronikbauteilen sowie eine Recheneinheit mit einem Prozessor umfassen (nicht dargestellt). Letztere kann ebenfalls eine von dem Energiezähler 130 an dem Netzanschlusspunkt 125 gemessene Leistung empfangen (angedeutet durch die gestrichelte Linie zwischen dem Energiezähler 130 und dem zweiten Wechselrichter 160a) und daraus unabhängig von dem ersten Energiespeicher 150 eine über den zweiten Wechselrichter 160a einzustellende Leistungsabgabe/-aufnahme P_{bat_2} ermitteln. Es ist ebenso möglich, dass der zweite Energiespeicher 160 mittels eines eigenen, zweiten Energiezählers (nicht dargestellt) die Leistung am Netzanschlusspunkt 125 misst. Die vorliegende Verwendung eines gemeinsamen Energiezählers 130 für beide Energiespeicher 150, 160 bietet jedoch den Vorteil, dass diese gemessene Leistungswerte von demselben Messgerät 130 empfangen, wodurch eine Toleranz zwischen Eingangsgrößen der Regelung der beiden Energiespeicher 150. 160 minimiert werden kann. Anstelle eines zweiten unabhängigen Energiespeichers 160 kann auch eine zweite unabhängige PV-Anlage in das Hausnetz integriert werden, die im Hinblick auf eine Leistungsabgabe in das Hausnetz in gleicher Weise wie der zweite unabhängige Energiespeicher 160 betrieben werden kann.

Um zu verhindern, dass sich die erste und zweite Batterie 150b, 160b durch unabhängige Regelung der Leistung am Netzanschlusspunkt 125 auf die erste Führungsgröße P_{PCC, set} = OW gegenseitig laden und entladen, enthält die Regelung des ersten Energiespeichers 150 eine zweite Führungsgröße P_{bat_1, set}, mittels derer eine Soll-Leistungsabgabe/-aufnahme des ersten Energiespeichers 150 auf einen Wert von P_{bat_1, set} = OW festlegt werden kann. Zur koordinierten Regelung beider Regelgrößen erfolgt eine Gewichtung zwischen einer ersten Abweichung ΔP_{PCC} von der ersten Führungsgröße P_{PCC, set} und einer zweiten Abweichung ΔP _{bat_1} von der zweiten Führungsgröße P_{bat_1, set}. Die Gewichtung kann insbesondere abhängig von einem Absolutwert der ersten Abweichung sein, so dass bei einer geringen ersten Abweichung ΔP_{PCC} die zweite Abweichung ΔP_{_bat_1} priorisiert und eingeregelt wird. Mit steigendem Absolutwert der ersten Abweichung ΔP_{PCC} verschiebt sich die Gewichtung/ Priorisierung in Richtung der ersten Führungsgröße P_{PCC, set}, so dass nun eine größere zweite Abweichung ΔP _{bat_1} toleriert und auf diese Weise die erste Abweichung ΔP_{PCC} reduziert wird. Auf diese Weise kann zur Vermeidung eines Netzbezugs/einer Netzeinspeisung zunächst die zweite Batterie 160b des zweiten Energiespeichers 160 entladen/geladen werden, da während dieses Vorgangs die erste Abweichung ΔP_{PCC} im Wesentlichen ausgeregelt werden kann, und erst wenn deren Leistung/Ladekapazität nicht mehr ausreicht, der erste Energiespeicher 150 aktiv werden.

Tritt im konkreten Fall eine Lastaufschaltung P_{load,} z.B. durch Einschalten der Waschmaschine in dem Hausnetz auf, so werden zum Einschaltzeitpunkt zunächst beide Energiespeicher aktiv, da in diesem Moment eine hohe erste Abweichung von der ersten Führungsgröße auftritt. Aufgrund der Gewichtung zwischen der ersten und zweiten AbweichungΔP_{PCC}, ΔP _{bat_1} in der Regelung des ersten Energiespeichers 150 reduziert sich jedoch dessen Leistungsabgabe jedoch sehr schnell, so dass die Last der Waschmaschine nach einem Einschwingvorgang nur durch eine Leistungsabgabe des zweiten Energiespeichers 160 (Entladen der zweiten Batterie 160b) kompensiert wird.

Wenn die zweite Batterie 160b entladen ist oder die Entladeleistung der zweiten Batterie 160b zur Lastkompensation nicht ausreicht, so tritt erneut eine Regelabweichung ΔP_{PCC} > OW (erste Abweichung ΔP_{PCC} von der ersten Führungsgröße P_{PCC, set}) auf, die von der Recheneinheit des ersten Wechselrichters 150a mittels des Energiezählers 130 detektiert werden kann. Daraufhin kann dieser, basierend auf der nun stärkeren Gewichtung der ersten Abweichung ΔP_{PCC}, eine zweite Abweichung Δ P_{bat_1} von der zweiten Führungsgröße P_{bat_1, set} = OW einstellen, um die Regelabweichung am Netzanschlusspunkt 125 zu reduzieren.

Um zu verhindern, dass die Recheneinheit des zweiten Energiespeichers 160 die von dem ersten Energiespeicher 150 abgegebene Leistung als Überschussleistung erkennt und diese auch zum Laden des zweiten Energiespeichers nutzt, wird die erste Abweichung ΔP_{PCC} nicht vollständig ausgeregelt, sondern es verbleibt eine bestimmte erste Abweichung, die dafür sorgt, dass gleichzeitig mit der Leistungsabgabe des ersten Energiespeichers 150 eine entsprechende kleine Leistung in das übergeordneten Netz 100 eingespeist wird.

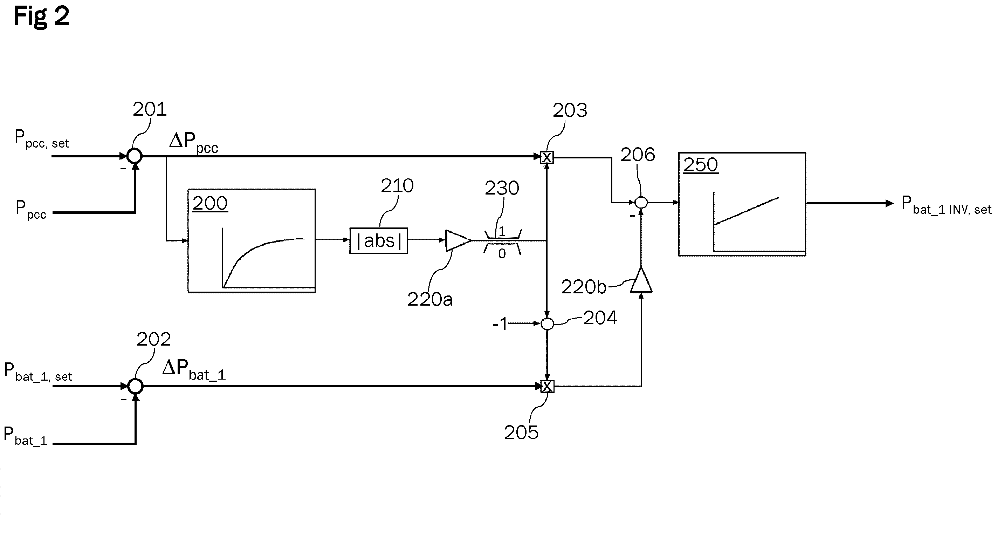

Figur 2 zeigt in diesem Zusammenhang schematisch und exemplarisch einen Funktionsblock zur Regelung des ersten Energiespeichers 150 in dem in Figur 1 gezeigten Hausnetz.

Der Funktionsblock hat als Eingangsgrößen die erste und zweite Führungsgröße P_{PCC, set}, P_{bat_1, set} sowie eine Ist-Leistungsabgabe/-aufnahme P_{pcc} am Netzanschlusspunkt 125 und eine Ist-Leistungsabgabe/-aufnahme P_{bat_1} des ersten Energiespeichers 150.

In einem oberen Pfad des Funktionsblocks wird an einem Knotenpunkt 201 die erste Abweichung ΔP_{pcc} von der ersten Führungsgröße P_{PCC, set} am Netzanschlusspunkt 125 ermittelt, welche einem Filter 200 zugeführt wird, der die ermittelte erste Abweichung ΔP_{pcc} über mehrere Messungen filtert. Zur Ermittlung eines Gewichtungsfaktors F_{G} wird nachfolgend von einer Ausgangsgröße des Filters 200 in einem Berechnungselement 210 ein Betrag gebildet, dieser mit einem ersten Verstärkungsfaktor 220a multipliziert und durch ein Begrenzungselement 230 auf Werte zwischen 0 und 1 begrenzt. Der erste Verstärkungsfaktor kann dabei insbesondere Werte kleiner oder gleich 0,02 annehmen. Die erste Abweichung ΔP_{pcc} wird dann mit dem derart ermittelten Gewichtungsfaktor F_{G} an einem Knotenpunkt 203 multipliziert.

In einem unteren Pfad des Funktionsblocks wird an einem Knotenpunkt 202 entsprechend die zweite Abweichung ΔP_{bat_1} von der zweiten Führungsgröße P_{bat_1, set} des zweiten Energiespeichers 160 bestimmt. Um eine Gewichtung zwischen der ersten Abweichung ΔP_{pcc} und der zweiten Abweichung ΔP_{bat_1} vorzunehmen, wird die zweite Abweichung nachfolgend mit einer an dem Knotenpunkt 204 gebildeten Differenz (F_{G}-1) multipliziert.

Es wird deutlich, dass bei einer kleinen ersten Abweichung ΔP_{pcc} der Gewichtungsfaktor F_{G} ebenfalls einen kleinen Wert annimmt, so dass die zweite Abweichung ΔP_{bat_1} entsprechend stärker gewichtet wird. Dies kann insbesondere dann der Fall sein, wenn die in dem Hausnetz benötigte/bereitgestellte Leistung von dem zweiten Energiespeicher 160 abgegeben/aufgenommen wird. In diesem Fall kann die zweite Abweichung ΔP_{bat_1} ausgeregelt und die Soll-Leistungsabgabe/- aufnahme P_{bat_1, set} = OW des ersten Energiespeichers 150 eingestellt werden.

Steigt die erste Abweichung ΔP_{pcc} durch zunehmendes Entladen oder Laden des zweiten Energiespeichers 160 an, so erhöht sich auch der Gewichtungsfaktor F_{G}, so dass die erste Abweichung ΔP_{pcc} nun stärker gewichtet wird, wodurch sich die Regelabweichung am Netzanschlusspunkt 125 (erste Abweichung ΔP_{pcc}) reduzieren wird, während die Regelabweichung des ersten Energiespeichers 150 (zweite Abweichung ΔP_{bat_1}) zunimmt. Auf diese Weise kommt bei abnehmender Leistung/Ladekapazität des zweiten Energiespeichers 160 der erste Energiespeicher 150 zum Einsatz.

Die gewichtete zweite Abweichung wird vorliegend mit einem zweiten Verstärkungsfaktor 220b multipliziert und an einem Knotenpunkt 206 von der ersten gewichteten Abweichung subtrahiert. Der zweite Verstärkungsfaktor 220b kann dabei insbesondere Werte kleiner oder gleich 0,2 annehmen.

Gemäß dem vorliegenden Ausführungsbeispiel wird die an dem Knotenpunkt 206 gebildete Differenz zwischen der ersten und der zweiten gewichteten Abweichung wird einem Regler 250 zugeführt, der daraus eine Stellgröße P_{INV, set} z.B. für einen Wechselrichter am Netzanschlusspunkt (nicht dargestellt) und/oder eine Stellgröße P_{bat_1_ INV, set} für den Wechselrichter 150a des ersten Energiespeichers 150 ermittelt, um die Leistungsabgabe/-aufnahme am Netzanschlusspunkt 125 sowie die Leistungsabgabe/-aufnahme des ersten Energiespeichers 150 einzustellen. Je nach Wahl des Vorzeichens der Verstärkungsfaktoren 220a, 220b kann an dem Knotenpunkt 206 auch eine Summe aus der ersten und der zweiten gewichteten Abweichung gebildet werden.

Mittels des ersten und zweiten Verstärkungsfaktors 220a, 220b kann insbesondere die bestimmte erste Abweichung eingestellt werden, welche verhindert, dass die Regelabweichung am Netzanschlusspunkt 125 beim Laden und Entladen des ersten Energiespeichers 150 vollständig ausgeregelt wird. Wie oben beschrieben, wird durch die sich dadurch einstellende geringe Leistung über den Netzanschlusspunkt 125 verhindert, dass eine in dem ersten Energiespeicher 150 gespeicherte Energie von der Recheneinheit des zweiten Energiespeichers 160 als Überschussleistung erkannt und zum Laden des zweiten Energiespeichers 160 genutzt wird, bzw. der erste Energiespeicher 150 von der Recheneinheit des zweiten Energiespeichers 160 als Verbraucher erkannt und auch von dem zweiten Energiespeicher 160 geladen wird.

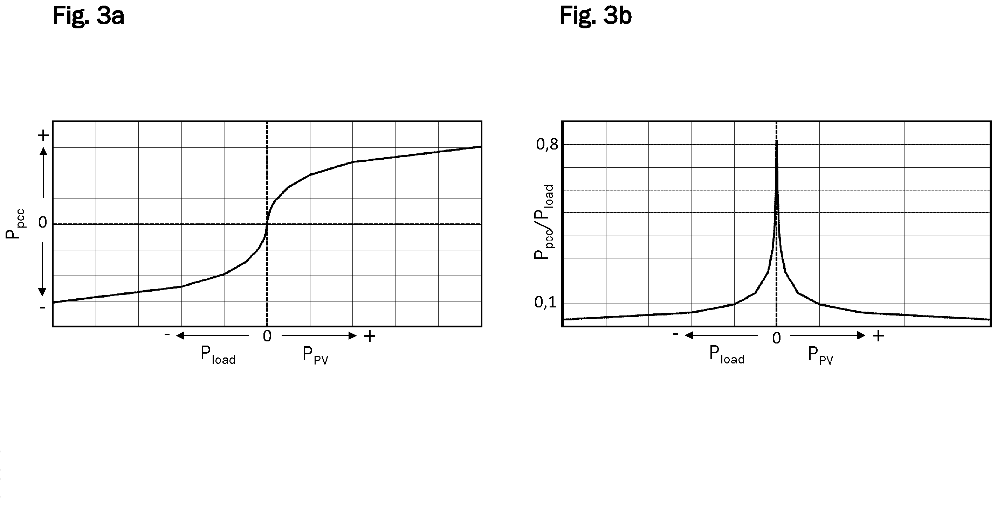

Ein Verlauf der bestimmten ersten Abweichung in Abhängigkeit von einer gesamten Leistungsabgabe/-aufnahme in dem Hausnetz wird nachfolgend in Verbindung mit den Figuren 3a und 3b beschrieben. Die Leistungsabgabe P_{load} an einen Energieverbraucher 140 des Hausnetzes bzw. die Leistungsaufnahme P_{PV} durch Leistungseinspeisung der PV-Anlage in das Hausnetz stellt dabei jeweils eine Summe aus Leistungsabgabe/-aufnahme des ersten Energiespeichers 160 und Leistungsabgabe/-aufnahme am Netzanschlusspunkt 125 dar.

Dabei zeigt Figur 3a absolute Werte der Leistungsabgabe/-aufnahme P_{pcc} am Netzanschlusspunkt 125 und Figur 3b ein Verhältnis von Leistungsabgabe/- aufnahme P_{pcc} am Netzanschlusspunkt 125 zur gesamten Leistungsabgabe/- aufnahme P_{load}, P_{PV} in dem Hausnetz. Die gezeigten Verläufe der Leistungsabgabe/- aufnahme P_{pcc} am Netzanschlusspunkt 125 stellen sich basierend auf der Wichtung der ersten und zweiten Abweichung ΔP_{pcc}, ΔP_{bat_1} von der jeweiligen Führungsgröße P_{PCC,} P_{bat_1} wie oben beschrieben ein. Vorliegend wurde der erste Verstärkungsfaktor 220a auf einen Wert von 0,02 und der zweite Verstärkungsfaktor 220b auf einen Wert von 0,2 eingestellt.

In einem ersten Quadranten des in Fig. 3a gezeigten Diagramms ist eine Kurve für eine Netzeinspeisung (Ppcc > 0) abhängig von einer Leistungseinspeisung durch eine Energieerzeugereinheit (P_{PV} > 0) aufgetragen, wenn diese auch zum Laden des ersten Energiespeichers 150 genutzt wird. In einem dritten Quadranten dieses Diagramms ist entsprechend eine Kurve für einen Netzbezug (Ppcc < 0) abhängig von einer Leistungsabgabe an einen Energieverbraucher 140 (P_{load} < 0) aufgetragen, wenn diese auch durch Entladen des ersten Energiespeichers 150 bereitgestellt wird. Diese Kurve entspricht einer Spiegelung der in dem ersten Quadranten aufgetragenen Kurve am Nullpunkt des Diagramms. An dem steilen Verlauf der Kurven in einem Bereich nahe des Nullpunkts, wird deutlich, dass sich bei kleiner Leistungseinspeisung bzw. kleiner Leistungsabgabe an einen Energieverbraucher 140 die Leistung P_{pcc} über den Netzanschlusspunkt 125 stark ändert. Insbesondere wird in diesem Bereich z.B. eine Leistungsabgabe an einen Endverbraucher im Wesentlichen durch den Netzbezug abgedeckt, wie insbesondere aus Fig. 3b hervorgeht, welche den Anteil des Netzbezugs P_{pcc} an Leistungsabgabe P_{load} verdeutlicht. Durch den steilen Abfall der Kurven im Bereich des Nullpunkts fällt dieser ungünstige Bereich jedoch z.B. bei üblichen Leistungsaufnahmen von Energieverbrauchern nicht stark ins Gewicht und die erforderliche Leistung kann hauptsächlich von dem ersten Energiespeicher 150 bereitgestellt werden. Somit überwiegen in diesem Fall die Vorteile eines koordinierten Ladens und Entladens des ersten und zweiten Energiespeichers 150, 160 die Nachteile durch einen geringfügig höheren Netzbezug. Durch Variation des ersten und zweiten Verstärkungsfaktors 220a, 220b können Maximal- und Minimalwert der Kurven sowie deren Anstieg und Abfall im Bereich des Nullpunkts verändert werden. Auf diese Weise können Messtoleranzen des mindestens einen Energiezählers 130 am Netzanschlusspunkt 125 berücksichtigt werden.

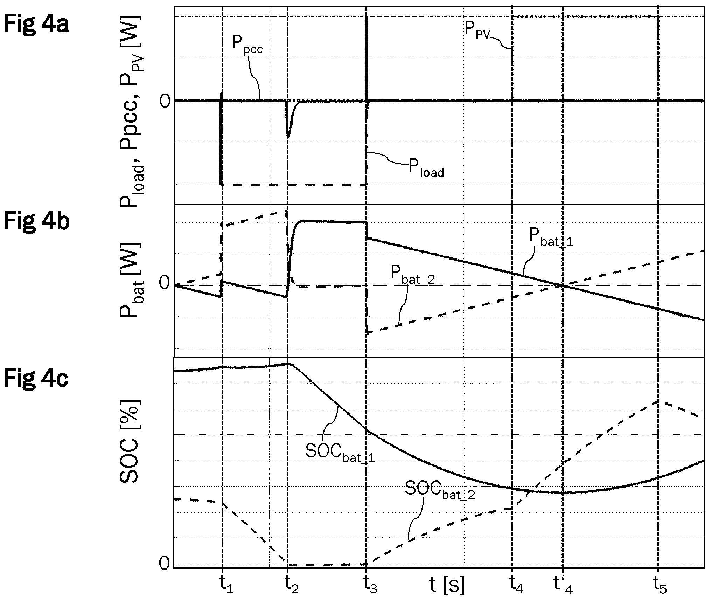

Die Figuren 4a bis 4c zeigen Energieflüsse und Ladezustände der Energiespeicher 150, 160 in dem in Figur 1 gezeigten Hausnetz, wenn das erfindungsgemäße Verfahren nicht angewendet wird. Dabei wird eine Leistungsabgabe/-aufnahme P_{pcc} über den Netzanschlusspunkt 125 von jedem der beiden Energiespeicher 150, 160 auf OW geregelt, um die mittels der PV-Anlage erzeugte Energie vorzugsweise in dem Hausnetz zu nutzen

In Figur 4a sind eine Leistungsabgabe P_{load} an einen Energieverbraucher 140, eine Leistungsabgabe/-aufnahme P_{pcc} über den Netzanschlusspunkt 125 und eine Leistungseinspeisung P_{PV} durch die PV-Anlage dargestellt.

Figur 4b zeigt eine Leistungsabgabe/-aufnahme P_{bat_1} des ersten Energiespeichers 150 bzw. dessen erster Batterie 150b sowie eine Leistungsabgabe/-aufnahme P_{bat_2} des zweiten Energiespeichers 160 bzw. dessen zweiter Batterie 160b.

In Figur 4c sind jeweils ein Ladezustand SOC_{bat_1} der ersten Batterie 150b und ein Ladezustand SOC_{bat_2} der zweiten Batterie 160b gezeigt. Die in den einzelnen Figuren gezeigten Größen sind über einer Zeit t aufgetragen.

Zu Beginn der Aufzeichnung zum Zeitpunkt t=0 ist ein Ladezustand SOC_{bat_2} der zweiten Batterie 160b höher als ein Ladezustand SOC_{bat} der erste Batterie 150b (siehe Figur 4c). Zu diesem Zeitpunkt betragen die Leistungsabgabe P_{load} an einen Energieverbraucher 140, eine Leistungsabgabe/-aufnahme P_{pcc} über den Netzanschlusspunkt 125 und eine Leistungseinspeisung P_{PV} durch die PV-Anlage jeweils OW. Da jedoch jeder der beiden Energiespeicher 150, 160 unabhängig voneinander versucht das Regelziel von P_{pcc} = OW am Netzanschlusspunkt 125 zu erreichen, findet bereits ab diesem Zeitpunkt ein gewisser Austausch von Energie aus dem zweiten Energiespeicher 160 in den ersten Energiespeicher 150 statt.

Zu einem Zeitpunkt t₁ wird ein Energieverbraucher 140 eingeschaltet, der bis zu einem Zeitpunkt t₃ eine konstante Leistung P_{load} aus dem Hausnetz entnimmt. Beim Einschalten des Energieverbrauchers 140 kommt es zu einer peakförmigen Leistungsaufnahme P_{pcc} aus dem übergeordneten Netz 100 in Höhe der von dem Energieverbraucher 140 aufgenommenen Leistung, woraufhin der zweite Energiespeicher 160 beginnt Leistung P_{bat_2} in das Hausnetz abzugeben, um die Leistung für den Betrieb des Energieverbrauchers 140 bereitzustellen. Man kann erkennen, dass die Leistungsabgabe P_{bat_2} in einem Zeitraum zwischen t₁ und t₂ höher als die Leistungsaufnahme P_{load} des Energieverbrauchers 140 ist, da auch in diesem Zeitraum zusätzlich Leistung P_{bat_2} der zweiten Batterie 160b zum Laden der ersten Batterie 150b verwendet wird.

Zum Zeitpunkt t₂ ist die erste Batterie 150b entladen, wodurch es auch hier zu einer Leistungsaufnahme P_{pcc} aus dem übergeordneten Netz 100 kommt, die jedoch eine geringere Amplitude aufweist als der Peak bei Einschalten des Energieverbrauchers 140. Daraufhin wird eine Leistung P_{bat_1} von der ersten Batterie 150b an das Hausnetz abgegeben, um die Leistung am Netzanschlusspunkt 125 wieder auf OW zu regeln. Die abgegebene Leistung P_{bat_1} bleibt im Zeitraum von t₂ bis t₃ konstant und entspricht betragsmäßig der von dem Energieverbraucher 140 aufgenommenen Leistung P_{load}.

Zum Zeitpunkt t₃ wird der Energieverbraucher 140 abgeschaltet, wodurch eine peakförmige Leistungsabgabe P_{pcc} am Netzanschlusspunkt auftritt, die eine sprungförmige Leistungsaufnahme P_{bat_2}der zweiten Batterie 160b zur Folge hat. Da nun kein anderer Energieverbraucher 140 Leistung aufnimmt, fließt bis zu einem Zeitpunkt t'₄ kontinuierlich Leistung P_{bat_1} aus der ersten Batterie 150b in die zweite Batterie 160b und der Ladezustand SOC_{bat_1} der ersten Batterie 150b nimmt ab. Dies ändert sich auch mit Zuschalten der PV-Anlage zu einem Zeitpunkt t₄ nicht. Letzteres bewirkt lediglich, dass die zweite Batterie 160b schneller geladen wird, so dass deren Ladezustand SOC_{bat_2} steiler ansteigt. Mittels der abgegebenen Leistung P_{PV} der PV-Anlage wird zusätzlich die erste Batterie 150b wieder aufgeladen. Zum Zeitpunkt t'₄ kehren sich die Energieströme um, und es wird Leistung P_{bat_2} aus der zweiten Batterie 160a in die erste Batterie 150b gefördert, wodurch deren Ladezustand SOC_{bat_1} wieder leicht ansteigt. Letztlich wird zu einem Zeitpunkt t₅ die PV-Anlage wieder abgeschaltet, so dass nun der Ladezustand SOC_{bat_2} der zweiten Batterie 160b erneut absinkt, während der Ladezustand SOC_{bat_1} der ersten Batterie 150b weiter ansteigt.

Es wird deutlich, dass die parallele Regelung der beiden Energiespeicher 150, 160 auf ein gemeinsames Regelziel von P_{pcc, set} = OW am Netzanschlusspunkt 125 zu einem unerwünschten Energieaustausch zwischen den beiden Energiespeichern 150, 160 führt.

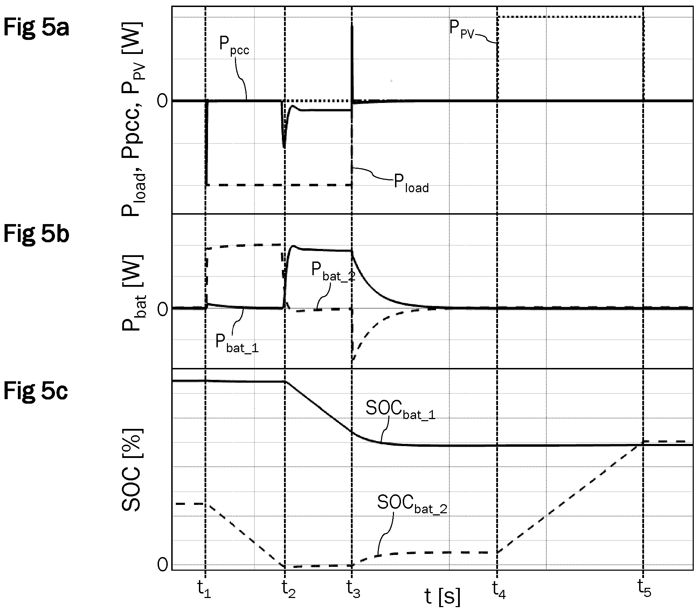

Im Gegensatz dazu zeigen die Figuren 5a bis 5c Energieflüsse und Ladezustände der Energiespeicher 150, 160 in dem in Figur 1 gezeigten Hausnetz, wenn ein Ausführungsbeispiel des erfindungsgemäßen Verfahrens angewendet wird.

Die in diesen Figuren dargestellten Größen sind identisch zu denen der Figuren 4a bis 4c. Das Laden und Entladen der beiden Energiespeicher 150, 160 wird nun jedoch koordiniert, indem zunächst nur der zweite Energiespeicher 160 das Regelziel von P_{pcc} = OW (erste Führungsgröße) am Netzanschlusspunkt 125 verfolgt und eine Soll-Leistungsabgabe/-aufnahme des ersten Energiespeichers 150 auf P_{bat_1, set} = OW (zweite Führungsgröße) gesetzt wird. Dadurch kommt es zu Beginn der Aufzeichnung im Zeitraum von t=0 bis t₁ zu keinem unerwünschten Energieaustausch zwischen den beiden Energiespeichern 150, 160.

Zum Zeitpunkt t₁ wird auch hier ein Energieverbraucher 140 eingeschaltet, der bis zu einem Zeitpunkt t₃ eine konstante Leistung P_{load} aus dem Hausnetz entnimmt. Beim Einschalten des Energieverbrauchers 140 kommt es wiederum zu einer peakförmigen Leistungsaufnahme P_{pcc} aus dem übergeordneten Netz 100 in Höhe der von dem Energieverbraucher 140 aufgenommenen Leistung, woraufhin der zweite Energiespeicher 160 beginnt Leistung in das Hausnetz abzugeben, um die Leistung für den Betrieb des Energieverbrauchers 140 bereitzustellen. Im vorliegenden Fall entspricht die von dem zweiten Energiespeicher 160 abgegebene Leistung P_{bat_2} betragsmäßig der Leistungsaufnahme P_{load} des Energieverbrauchers 140, da keine zusätzlich Leistung P_{bat_2} der zweiten Batterie 160b zum Laden der ersten Batterie 150b verwendet wird.

Zum Zeitpunkt t₂ ist die zweite Batterie 160b auch hier entladen, wodurch es erneut zu einer Leistungsaufnahme P_{pcc} aus dem übergeordneten Netz 100 kommt, die jedoch eine geringere Amplitude aufweist als der Peak bei Einschalten des Energieverbrauchers 140. Diese wird durch eine Leistungsabgabe P_{bat_1} des ersten Energiespeichers 150weitgehend kompensiert, wobei während des Entladens der ersten Batterie 150b weiterhin eine kleine Leistung über den Netzanschlusspunkt 125 fließt wodurch ein unerwünschtes Laden der zweiten Batterie 160b verhindert werden kann. Insbesondere wird vorliegend durch die Einstellung der im Vergleich zur Leistungsabgabe P_{bat_1} der ersten Batterie 150b kleinen Netzbezugs P_{pcc} verhindert, dass die Recheneinheit des zweiten Wechselrichters 160a in dem zweiten Energiespeicher 160 fälschlicherweise die in der ersten Batterie 150b gespeicherte Energie als Überschussleistung erkennt und diese zum Laden der zweiten Batterie 160b verwendet.

Die über den Netzanschlusspunkt 125 bezogene Leistung P_{pcc} und die von der ersten Batterie 150b abgegebene Leistung P_{bat_1} bleiben im Zeitraum von t₂ bis t₃ weitgehend konstant und deren Summe entspricht betragsmäßig der von dem Energieverbraucher 140 aufgenommenen Leistung P_{load}.

Zum Zeitpunkt t₃ wird der Energieverbraucher 140 abgeschaltet, wodurch eine peakförmige Leistungsabgabe P_{pcc} am Netzanschlusspunkt 125 auftritt, die eine sprungförmige Leistungsaufnahme P_{bat_2} der zweiten Batterie 160b verursacht. Aufgrund des in Figur 2 beschriebenen Filters 200, mittels dem der Gewichtungsfaktor F_{G} zur Gewichtung der ersten und zweiten Abweichung von den entsprechenden Führungsgrößen gebildet wird, erfolgt die Abregelung der Leistungsabgabe P_{bat_1} auf den Sollwert P_{bat_1,set} = OW in dem vorliegenden Beispiel verzögert, wodurch die zweite Batterie 160b geringfügig mit Energie aus der ersten Batterie 150b geladen wird. Im Vergleich zu dem in den Figuren 4a bis 4c beschriebenen Verhalten ist dieser Energieaustausch jedoch vernachlässigbar und kann zudem durch Änderung der Filterparameter. des Filters 200 weiter reduziert werden.

Zum Zeitpunkt t₄ wird auch hier die PV-Anlage zugeschaltet, welche nachfolgend kontinuierlich bis zu ihrem Abschalten zum Zeitpunkt t₅ nur die zweite Batterie 160b mittels der Leistungseinspeisung P_{PV} auflädt, da die Soll- Leistungsabgabe/-aufnahme des ersten Energiespeichers 150 P_{bat_1, set} = OW beträgt und keine Regelabweichung am Netzanschlusspunkt 125 vorliegt. Dies ist an dem ansteigenden Ladezustand SOC_{bat_2} der zweiten Batterie 160b und dem konstanten Ladezustand SOC_{bat_1} der ersten Batterie 150b in diesem Zeitraum erkennbar. Nach dem Abschalten der PV-Anlage bleibt der Ladezustand beider Batterien 150b, 160b aufgrund der vorgegebenen ersten und zweiten Führungsgröße (P_{pcc, set} = OW, P_{bat_1}, ₛₑₜ = OW) konstant.

Anhand des in den Figuren 4a bis 5c beschriebenen Verhaltens der Energieströme in dem Hausnetz ohne und mit Verwendung eines Ausführungsbeispiels des erfindungsgemäßen Verfahrens wird deutlich, dass letzteres es ermöglicht, ein Laden und Entladen zweier voneinander unabhängiger Energiespeicher zu koordinieren und dadurch einen unerwünschten Energieaustausch zwischen den beiden Energiespeichern zu verhindern.

## Patentansprüche

1. Verfahren zum Betreiben von mindestens einem ersten und mindestens einem zweiten, von dem ersten unabhängigen, Energiespeicher (150, 160) in einem elektrischen Teilnetz, das über einen Netzanschlusspunkt (125) mit einem übergeordneten Netz (100) verbunden ist und neben den Energiespeichern (150, 160) mindestens einen Energieerzeuger, mindestens einen Energieverbraucher (140) und mindestens ein Messgerät (130) am Netzanschlusspunkt (125) enthält, umfassend die Schritte:
- Bestimmen einer Soll-Leistungsabgabe bzw. einer Soll-Leistungsaufnahme am Netzanschlusspunkt (125) als erste Führungsgröße;
- Bestimmen einer Soll-Leistungsabgabe bzw. einer Soll-Leistungsaufnahme des ersten Energiespeichers (150) als zweite Führungsgröße;
- Ermitteln einer ersten Abweichung von der ersten Führungsgröße und einer zweiten Abweichung von der zweiten Führungsgröße; und
- Einstellen einer Leistungsabgabe oder einer Leistungsaufnahme des ersten Energiespeichers (160) basierend auf einer Gewichtung zwischen der ersten Abweichung und der zweiten Abweichung.

2. Verfahren nach Anspruch 1, wobei für die Soll-Leistungsabgabe/-aufnahme am Netzanschlusspunkt und die Soll-Leistungsaufnahme/-abgabe des ersten Energiespeichers ein Wert von null bestimmt wird.

3. Verfahren nach Anspruch 1 oder 2, wobei die Gewichtung zwischen der ersten und der zweiten Abweichung abhängig von einem Absolutwert der ersten Abweichung erfolgt.

4. Verfahren nach einem der vorstehenden Ansprüche, wobei die Gewichtung zwischen der ersten und zweiten Abweichung derart erfolgt, dass mit steigendem Absolutwert der ersten Abweichung die Leistungsabgabe/-aufnahme des ersten Energiespeichers zunimmt.

5. Verfahren einem der vorstehenden Ansprüche, wobei die Gewichtung zwischen der ersten und der zweiten Abweichung derart erfolgt, dass bei einer Leistungsabgabe/-aufnahme des ersten Energiespeichers eine bestimmte erste Abweichung erhalten bleibt.

6. Verfahren nach Anspruch 5, wobei die bestimmte erste Abweichung in Abhängigkeit einer Messtoleranz des mindestens einen Messgeräts am Netzanschlusspunkt bestimmt wird.

7. Verfahren nach einem der vorstehenden Ansprüche, wobei die gewichtete erste und die gewichtete zweite Abweichung einem Regler (250) zugeführt werden, um die Leistungsabgabe/-aufnahme des ersten Energiespeichers (150) und die Leistungsabgabe/-aufnahme am Netzanschlusspunkt (125) einzustellen.

8. Verfahren nach einem der vorstehenden Ansprüche, wobei die Gewichtung zwischen der ersten und der zweiten Abweichung mittels mindestens eines Gewichtungsfaktors erfolgt.

9. Recheneinheit umfassend einen Prozessor, der so konfiguriert ist, dass er das Verfahren nach einem der vorstehenden Ansprüche ausführt.

10. Elektrisches Teilnetz, das über einen Netzanschlusspunkt (125) mit einem übergeordneten Netz (100) verbunden ist, mit mindestens einem ersten und mindestens einem zweiten, von dem ersten unabhängigen, Energiespeicher (150, 160) sowie mindestens einem Energieerzeuger, mindestens einem Energieverbraucher (140), mindestens einem Messgerät (130) am Netzanschlusspunkt und einer Recheneinheit nach Anspruch 9.

11. Computerprogramm umfassend Befehle, die bei der Ausführung des Programms durch einen Computer diesen veranlassen, das Verfahren nach Anspruch 1 bis 8 auszuführen.

12. Computerlesbarer Datenträger, auf dem das Computerprogramm nach Anspruch 11 gespeichert ist.
